# EUROPÄISCHE PATENTSCHRIFT

(11) **EP 1 096 242 B1**
(45) Veröffentlichungstag und Bekanntmachung des Hinweises auf die Patenterteilung: **16.01.2008**
(21) Anmeldenummer: 00122340.3
(22) Anmeldetag: 23.10.2000
(51) Int. Cl.: G01L 9/02, G01L 9/00

(54) **Drucksensor**
Pressure sensor
Capteur de pression

(30) Priorität: 27.10.1999 DE 29918915 U
(43) Veröffentlichungstag der Anmeldung: 02.05.2001
(73) Patentinhaber: TRW Automotive Electronics & Components GmbH, 78315 Radolfzell (DE)
(72) Erfinder: Altmann, Markus, 78345 Moos-Bankholzen (DE); Skofljanec, Robert, 78345 Moos-Bankholzen (DE); Müller, Clemens, 78315 Radolfzell (DE)
(74) Vertreter: Degwert, Hartmut

(56) Entgegenhaltungen:
- EP-A- 0 443 073
- DE-A- 4 010 734
- US-A- 3 806 471
- PATENT ABSTRACTS OF JAPAN vol. 018, no. 315 (P-1755), 15. Juni 1994 (1994-06-15) & JP 06 074848 A (SUMITOMO RUBBER IND LTD;OTHERS: 01), 18. März 1994 (1994-03-18)
- PATENT ABSTRACTS OF JAPAN vol. 011, no. 037 (P-543), 4. Februar 1987 (1987-02-04) & JP 61 207939 A (YOKOHAMA RUBBER CO LTD:THE), 16. September 1986 (1986-09-16)
- PATENT ABSTRACTS OF JAPAN vol. 013, no. 345 (P-909), 3. August 1989 (1989-08-03) & JP 01 105130 A (AKIRA SUGIMOTO;OTHERS: 01), 21. April 1989 (1989-04-21)
- PATENT ABSTRACTS OF JAPAN vol. 008, no. 233 (P-309), 26. Oktober 1984 (1984-10-26) & JP 59 111031 A (MATSUSHITA DENKI SANGYO KK), 27. Juni 1984 (1984-06-27)

## Beschreibung

Die Erfindung betrifft einen Drucksensor mit einer Sensormembran, die auf einer ihrer Flächen durch den zu bestimmenden Mediendruck beaufschlagbar ist.

Drucksensoren werden je nach ihrem Einsatzgebiet in verschiedenen Bauformen ausgeführt. Für den Einsatz in Kraftfahrzeugen kommen nur robuste Ausführungen in Betracht, die in einem weiten Temperaturbereich über viele Jahre zuverlässig arbeiten, während der absoluten Meßgenauigkeit geringere Bedeutung zukommt. Die meisten Drucksensoren arbeiten mit einem druckabhängigen Hub, dessen Größe ein Maß für den gemessenen Druck ist. Eine elastische Sensormembran, die auf einer ihrer Flächen mit einem konstanten Referenzdruck und auf ihrer gegenüberliegenden Fläche durch den zu bestimmenden Mediendruck beaufschlagt wird, erfährt durch den Differenzdruck eine Auslenkung, deren Größe z.B. über ein angekoppeltes Potentiometer in ein elektrisches Meßsignal umgesetzt werden kann. Für die Auslösung von druckabhängigen Schaltvorgängen werden durch den Hub der Sensormembran Grenzschalter direkt oder indirekt betätigt. In allen Fällen sind bewegliche Teile erforderlich, die über lange Zeiträume Erschütterungen, Verschleiß und starken Temperatureinflüssen ausgesetzt sind. Auch die Medientrennung zwischen den beiden Seiten einer Sensormembran ist unter diesen Umständen problematisch.

Aus der EP-A-0 443 073 ist ein Drucksensor bekannt, der eine Sensormembran aufweist, die an ihrem äußeren Umfangsrand in einem Gehäuse eingespannt ist. Die Sensormembran besteht aus einer elektrisch nicht-leitenden und einer elektrisch leitenden Elastomerschicht. Die Sensormembran ist an zwei voneinander beabstandeten Meßzonen durch je eine Elektrode kontaktiert. Wenn auf die eine Seite der Sensormembran ein Druck wirkt, so daß die Sensormembran verformt wird, ändert sich der elektrische Widerstand zwischen den beiden Elektroden.

Aus der JP 06-074848 ist ein Drucksensor bekannt, der eine elektrisch leitende Membran aus Gummi zeigt, die an ihrem äußeren Umfangsrand in einem Gehäuse eingespannt ist und von beiden Seiten mit Druck beaufschlagt wird. Eine Elektrodenplatte liegt an einer Seite der Membran unter Vorspannung einer Feder an. In Abhängigkeit von der Druckdifferenz auf den beiden Seiten ändert sich ein innerer Widerstandswert der Membran und damit ein elektrischer Widerstandswert zwischen dem Gehäuse und der Membran.

Durch die Erfindung wird ein Drucksensor geschaffen, der durch seine Robustheit, seine einfache Bauform und geringe Baugröße besonders zur Verwendung in Kraftfahrzeugen geeignet ist und sowohl für die Erzeugung einer druckproportionalen Meßgröße als auch für die Auslösung von druckabhängigen Schaltvorgängen geeignet ist.

Gemäß der Erfindung ist die Sensormembran auf ihrer gesamten gegenüberliegenden Fläche starr abgestützt. Die Sensormembran besteht aus einem Elastomermaterial, in dessen elektrisch nichtleitender Masse feine Teilchen aus elektrisch leitfähigem Material homogen verteilt in solcher Dichte eingebettet sind, daß eine durch den Mediendruck bewirkte Kompression der Membran zu einer meßbaren Änderung des Flächenwiderstands der Sensormembran führt, da die Teilchen aus elektrisch leitfähigem Material näher aneinander bewegt werden und folglich die Wahrscheinlichkeit der Berührung eines benachbarten Teilchens zunimmt. Somit benötigt der erfindungsgemäße Drucksensor keinerlei bewegliche Teile, so daß auch die mit beweglichen Teilen verbundenen Probleme wie Störanfälligkeit, großer Bauraum, Verschleiß, hohe Herstellungskosten und Undichtigkeiten entfallen. Der elektrische Flächenwiderstand der Sensormembran kann durch Kontaktierung an zwei beabstandeten Meßpunkten mittels bekannter Meßschaltungen bestimmt werden. Für die Erzeugung eines druckproportionalen Meßsignals wird vorteilhaft eine Brückenschaltung verwendet. Für die druckabhängige Auslösung von Schaltvorgängen sind einfache Differenzverstärker-Schaltungen geeignet.

Bei der bevorzgten Ausführungsform der Erfindung wird die Sensormembran auf ihrer starr abgestützten Seite durch zwei Meßkontakte kontaktiert. Die Sensormembran als solche gewährleistet so eine perfekte Medientrennung.

Der Aufbau des Drucksensors beruht vorzugsweise auf dem einfachen Prinzip des Verspannens der Sensormembran mit einem Stützblock zwischen ringförmigen Bauteilen unter Zwischenfügung von Dichtringen.

Weitere Vorteile und Merkmale der Erfindung ergeben sich aus der folgenden Beschhreibung einer Ausführungsform des Drucksensors unter Bezugnahme auf die beigefügten Zeichnungen. In den Zeichnungen zeigen:
Fig. 1 eine Draufsicht des Drucksensors auf seiner Medienseite;
Fig. 2 einen Schnitt entlang Linie II-II in Fig.1;
Fig. 3 einen Schnitt entlang Linie III-III in Fig.1;
Fig. 4 einen Schnitt entlang Linie IV-IV in Fig.1;
Fig. 5 eine Draufsicht des Drucksensors auf seinen Grundkörper; und
Fig. 6 eine Schnittansicht einer bevorzugten Ausführungsform des Drucksensors.

Der allgemein mit 10 bezeichnete Drucksensor weist als wesentliches Funktionselement eine Sensormembran 12 auf, die aus einem elektrisch isolierenden Elastomermaterial mit in dessen Masse eingebetteten Teilchen aus einem elektrisch leitfähigen Material besteht. Die elektrisch leitfähigen Teilchen sind in solcher Dichte vorgesehen, daß sie der Sensormembran einen meßbaren Volumenwiderstand und somit auch Flächenwiderstand verleihen. Der elektrische Volumen- bzw. Flächenwiderstand nimmt bei Kompression der Membranmasse meßbar ab, indem die leitfähigen Teilchen näher aneinander gelangen und die Wahrscheinlichkeit der Berührung benachbarter Teilchen zunimmt. Ein geeignetes Elastomermaterial ist Silikongummi, worin elektrisch leitende Partikel in homogener Verteilung eingebettet sind. Die Dichte der leitfähigen Partikel kann empirisch bestimmt werden. Beispiele für geeignete Partikel sind: Nickel, Silber, Kupfer, versilberte Kupfer- oder Glaspartikel.

Die Sensormembran 12 ist eine ebene, kreisrunde Scheibe, die auf einer ihrer beiden Flächen auf einer Stirnfläche eines zylindrischen Stützblocks 14 ruht und starr auf diesem abgestützt ist. In dem aus elektrisch isolierendem Material bestehenden Stützblock 14 sind zwei Kontaktstifte 16 eingelassen, die an ihren der Sensormembran zugewandten Enden verbreitert sind und zur Bildung von Meßkontakten flächig an der Sensormembran 12 anliegen. Die entgegengesetzten Enden der Kontaktstifte 16 ragen aus dem Stützblock heraus und bilden Anschlußstifte für einen Steckverbinder. Der Stützkörper 14 ist passend und bündig in einer zylindrischen Einsenkung eines ringförmigen Grundkörpers 18 aufgenommen.

Ein Druckring 20 ist auf seinen beiden Ringflächen mit drei konzentrischen Rillen zur Aufnahme von O-Dichtringen versehen und liegt auf der von dem Stützblock 14 abgewandten Fläche der Sensormembran 12 auf. Mit seiner gegenüberliegenden Ringfläche ist der Druckring 20 durch Schrauben 22 gegen einen Ringflansch 24 an einem Ende eines Anschlußstutzens 26 verspannt. Die durch den Druckring 20 und den Ringflansch 24 mit Anschlußstutzen 26 gebildete Baugruppe wird von einem Spannring 28 übergriffen, der mittels Spannschrauben 30 gegen den Grundkörper 18 verspannt ist, wodurch der Druckring gegen die Fläche der Sensormembran 12 gepreßt wird. Der Anpreßdruck kann durch zwischen Spannring 28 und Grundkörper 18 eingefügte Abstandshalter definiert werden.

Der ringförmige Grundkörper 18 bildet in seiner Mitte einen Steckerschacht 32, in den die Kontaktstifte 16 hineinragen. An den Steckerschacht 32 schließt sich ein radialer Kabelführungskanal 34 an.

Eine präzise Ausrichtung der zusammengesetzten Bestandteile des Drucksensors wird durch Paßstifte 36 erreicht, die in entsprechende, fluchtende Bohrungen des Spannrings 28 und des Grundkörpers 18 eingesetzt sind. Durch die Paßstifte sind auch die relativen Drehstellungen der Bestandteile des Drucksensors präzise festgelegt.

Der Anschlußstutzen 26 umgibt einen Medienkanal, der in der zentralen Öffnung des Druckrings 20 mündet, die den freiliegenden Teil der Sensormembranfläche umgibt. Diese Sensormembranfläche wird über den Anschlußstutzen 26 mit dem zu bestimmenden Mediendruck beaufschlagt. Die Medientrennung erfolgt durch die Sensormembran selbst, in Verbindung mit den in die Rillen des Druckrings 20 eingelegten O-Dichtringen.

Die Kontaktstifte werden über einen (nicht gezeigten) Steckverbinder mit einem elektronischen Schaltkreis verbunden, der je nach Anwendung des Drucksensors z.B. als Meßbrücke zur Erzeugung eines druckproportionalen Meßsignals oder als Differenzverstärker zur druckabhängigen Auslösung von Schaltvorgängen ausgebildet sein kann. Durch Beaufschlagung der freiliegenden Fläche der Sensormembran 12 mit dem über den Anschlußstutzen 26 herangefühhrten Mediendruck wird die Masse der Sensormembran 12 komprimiert, wodurch ihr elektrischer Volumenwiderstand und damit auch ihr über die Kontaktstifte 16 abgenommener Flächenwiderstand reduziert wird. Zur Maximierung des Meßsignals sind die Enden der Kontaktstifte 16 im Bereich des eingespannten Umfangsrandes der Sensormembran 12 angeordnet.

Bei der gezeigten Ausführungsform ist die Sensormembran 12 eine runde, ebene Materialscheibe. Sie kann aber auch als an spezielle Anwendungen angepaßter dreidimensionaler Formkörper ausgebildet sein.

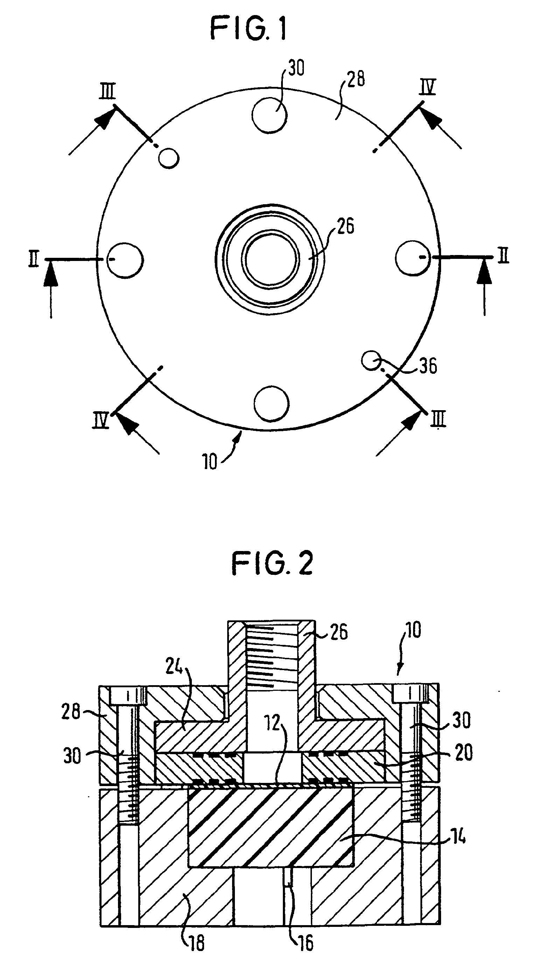

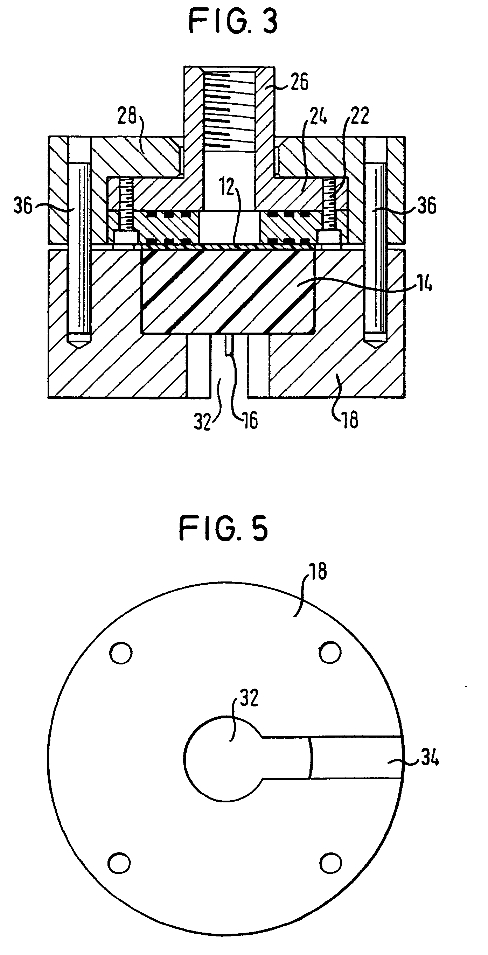

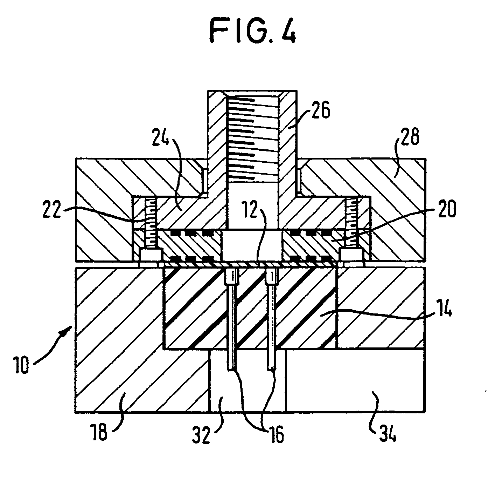

Die in den Fig. 1 bis 5 gezeigte Ausführungsform eignet sich besonders für Erprobungszwecke, da durch die Verwendung von Spannschrauben 30 ein lösbarer Zusammenbau ermöglicht wird.

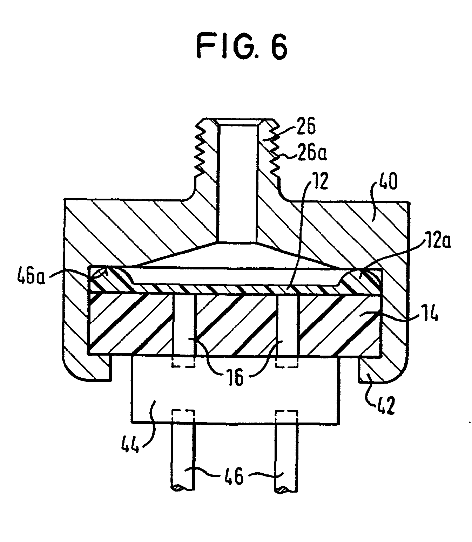

Eine für die rationelle Serienfertigung geeignete Ausführungsform zeigt die Fig. 6. Bei dieser Ausführungsform ist der Anschlußstutzen 26, der mit einem Außengewinde 26a versehen ist, einteilig mit einem Gehäusekörper 40 ausgebildet, in den der Stützblock 14 eingesetzt ist. Durch einen umgebördelten Rand 42 des Gehäusekörpers 40 ist der Stützblock 14 mit der darauf aufliegenden Sensormembran 12 fest eingespannt. Die Sensormembran 12 weist an ihrem Außenumfang einen angeformten Ringwulst 12a auf, der gegen eine gegenüberliegende Ringfläche 40a im Inneren des Gehäusekörpers 40 angedrückt ist und den Aufbau abdichtet. Die Kontaktstifte 16 ragen in ein an den Stützblock 14 angesetztes Elektronikmodul 44, aus dem Anschlußstifte 46 herausgeführt sind. Das Elektronikmodul 44 enthält wenigstens die hochohmigen Bauteile der Meßschaltung, durch die Widerstandsänderungen der Sensormembran 12 in ein elektrisches Signal umgesetzt werden.

Einer der Kontaktstifte 16 kann entfallen, wenn die Sensormembran 12, insbesondere an ihrem Außenumfang, an einem Kontaktring anliegt, der in den Stützblock 14 eingebettet sein kann. Alternativ wird der Gehäusekörper 40 aus elektrisch leitfähigem Material, insbesondere Metall, gefertigt und bildet insgesamt sowie mit der Ringfläche 40a einen Massekontakt und zugleich eine elektrische Abschirmung.

## Patentansprüche

1. Drucksensor mit einer Sensormembran (12), die auf einer ihrer Flächen durch den zu bestimmenden Mediendruck beaufschlagbar ist, wobei die Sensormembran (12) auf ihrer gesamten gegenüberliegenden Fläche starr abgestützt ist und wobei die Sensormembran (12) aus einem Elastomermaterial besteht, in dessen elektrisch nichtleitender Masse feine Teilchen aus elektrisch leitfähigem Material homogen verteilt in solcher Dichte eingebettet sind, daß eine durch den Mediendruck bewirkte Kompression der Sensormembran (12) zu einer meßbaren Änderung ihres elektrischen Flächenwiderstands führt.

2. Drucksensor nach Anspruch 1, **dadurch gekennzeichnet, daß** die Sensormembran (12) an wenigstens zwei voneinander beabstandeten Meßzonen durch je einen Meßkontakt (16) kontaktiert ist.

3. Drucksensor nach Anspruch 2, **dadurch gekennzeichnet, daß** die Sensormembran (12) an ihrem Umfangsrand fest eingespannt ist.

4. Drucksensor nach Anspruch 3, **dadurch gekennzeichnet, daß** einer der Meßkontakte durch einen Kontaktring gebildet ist, der am Umfangsrand der Sensormembran (12) anliegt.

5. Drucksensor nach einem der Ansprüche 2 bis 4, **dadurch gekennzeichnet, daß** die Meßkontakte (16) auf der Seite der starr abgestützten Fläche der Sensormembran (12) angeordnet sind.

6. Drucksensor nach Anspruch 5, **dadurch gekennzeichnet, daß** die Meßkontakte (16) angrenzend an die abgestützte Fläche der Sensormembran (12), die der vom zu bestimmenden Mediendruck beaufschlagbaren Fläche gegenüberliegt, angeordnet sind.

7. Drucksensor nach einem der vorstehenden Ansprüche, **dadurch gekennzeichnet, daß** die Sensormembran (12) mit ihrer starr abgestützten Fläche auf einem Stützblock (14) aufliegt und daß gegen den Umfangsrand der Sensormembran (12) auf ihrer durch den Mediendruck beaufschlagbaren Seite eine ringförmige Druckplatte (20) verspannt ist.

8. Drucksensor nach Anspruch 7, **dadurch gekennzeichnet, daß** zwischen der Druckplatte (20) und der ihr zugewandten Fläche der Sensormembran (12) wenigstens eine die vom Mediendruck beaufschlagbare Fläche der Sensormembran umgebende Ringdichtung eingespannt ist.

9. Drucksensor nach Anspruch 8, **dadurch gekennzeichnet, daß** die Ringdichtung durch einen am Außenumfang der Sensormembran (12) angeformten Ringwulst (12a) gebildet ist.

10. Drucksensor nach Anspruch 7 oder 8, **dadurch gekennzeichnet, daß** die ringförmige Druckplatte (20) ihrerseits gegen einen ringförmigen Anschlußflansch (24) an einem Ende eines Anschlußstutzens (26) unter Zwischenfügung wenigstens einer Dichtung verspannt ist.

11. Drucksensor nach den Ansprüchen 7 bis 9, **dadurch gekennzeichnet, daß** der ringförmige Anschlußflansch (26) von einem Spannring (28) übergriffen wird, der durch Spannschrauben (30) gegen einen den Stützblock (14) in einer Ausnehmung aufnehmenden Grundkörper (18) verspannt ist.

12. Drucksensor nach Anspruch 2 und einem der Ansprüche 7 bis 11, **dadurch gekennzeichnet, daß** die Meßkontakte (16) mit daran angeschlossenen Kontaktstiften in den Stützblock (14) eingelassen sind.

13. Drucksensor nach Anspruch 12, **dadurch gekennzeichnet, daß** die Kontaktstifte (16) aus dem Stützblock (14) auf dessen von der Sensormembran (12) abgewandten Fläche herausragen in einen Steckerschacht (32), den der ringförmig ausgebildete Grundkörper (18) umgibt.

14. Drucksensor nach einem der Ansprüche 11 bis 13, **dadurch gekennzeichnet, daß** der Spannring (28) mit dem Grundkörper (18) durch in miteinander fluchtende Bohrungen eingesetzte Paßstifte (36) verbunden ist.

15. Drucksensor nach einem der Ansprüche 1 bis 6, **dadurch gekennzeichnet, daß** die Sensormembran (12) auf einem Stützblock (14) flächig anliegt und der Stützblock (14) mit der Sensormembran (12) zwischen einer innenliegenden Ringfläche (40a) und einem umgebördelten Rand (42) eines Gehäusekörpers (40) eingespannt ist.

16. Drucksensor nach Anspruch 15, **dadurch gekennzeichnet, daß** der Gehäusekörper metallisch ist und die Ringfläche (40a) einen die Sensormembran (12) an ihrem Außenumfang kontaktierenden Kontaktring bildet.

## Claims

1. A pressure sensor comprising a sensor diaphragm (12) which on one of its surfaces can be acted upon by the fluid pressure to be determined, the sensor diaphragm (12) being rigidly supported on its entire opposite surface and the sensor diaphragm (12) being made of an elastomeric material in the electrically non-conducting mass of which fine particles of an electrically conductive material are homogeneously distributed and embedded in such a density that a compression of the sensor diaphragm (12) caused by the fluid pressure results in a measurable change in its electrical surface resistance.

2. The pressure sensor as set forth in claim 1, **characterized in that** the sensor diaphragm (12) is contacted by one measuring contact (16) each in at least two measurement zones spaced away from each other.

3. The pressure sensor as set forth in claim 2, **characterized in that** the sensor diaphragm (12) is firmly fixed at its peripheral rim.

4. The pressure sensor as set forth in claim 3, **characterized in that** one of the measuring contacts is formed by a contact ring in contact with the peripheral rim of the sensor diaphragm (12).

5. The pressure sensor as set forth in any of claims 2 to 4, **characterized in that** the measuring contacts (16) are arranged on the side of the rigidly supported surface of the sensor diaphragm (12).

6. The pressure sensor as set forth in claim 5, **characterized in that** the measuring contacts (16) are arranged adjoining the supported surface of the sensor diaphragm (12) which is opposite the surface adapted to be acted upon by the fluid pressure to be determined.

7. The pressure sensor as set forth in any of the preceding claims, **characterized in that** the sensor diaphragm (12) rests on a supporting block (14) by its rigidly supported surface and that an annular pressure plate (20) is braced against the peripheral rim of the sensor diaphragm (12) on its side adapted to be acted upon by the fluid pressure.

8. The pressure sensor as set forth in claim 7, **characterized in that** at least one ring seal surrounding the surface of the sensor diaphragm (12) adapted to be acted upon by the fluid pressure is clamped between the pressure plate (20) and the surface of the sensor diaphragm (12) facing the pressure plate.

9. The pressure sensor as set forth in claim 8, **characterized in that** the ring seal is formed by a ring bead (12a) formed integrally with the outer circumference of the sensor diaphragm (12).

10. The pressure sensor as set forth in claim 7 or 8, **characterized in that** the annular pressure plate (20) is in turn braced against an annular connecting flange (24) at one end of a connecting piece (26), with at least one seal being interposed.

11. The pressure sensor as set forth in claims 7 to 9, **characterized in that** the annular connecting flange (24) is clasped by a clamping ring (28) which is clamped by clamping bolts (30) against a base body (18) housing the supporting block (14) in a depression.

12. The pressure sensor as set forth in claim 2 and any of claims 7 to 11, **characterized in that** the measuring contacts (16) with contact pins connected thereto are embedded in the supporting block (14).

13. The pressure sensor as set forth in claim 12, **characterized in that** the contact pins (16) protrude from the supporting block (14) on its surface facing away from the sensor diaphragm (12) and into a connector accommodation (32) which is surrounded by the annularly configured base body (18).

14. The pressure sensor as set forth in any of claims 11 to 13, **characterized in that** the clamping ring (28) is connected to the base body (18) by locating pins (36) inserted in holes aligned with each other.

15. The pressure sensor as set forth in any of claims 1 to 6, **characterized in that** the sensor diaphragm (12) is in full contact with a supporting block (14), and the supporting block (14) with the sensor diaphragm (12) is clamped between an internal ring surface (40a) and a crimped rim (42) of a housing body (40).

16. The pressure sensor as set forth in claim 15, **characterized in that** the housing body is metallic and the ring surface (40a) forms a contact ring contacting the sensor diaphragm (12) at its outer circumference.

## Revendications

1. Capteur de pression comportant une membrane de capteur (12) qui peut être soumise sur une de ses surfaces à la pression de fluide à déterminer, la membrane de capteur (12) étant soutenue de manière rigide sur toute sa surface opposée et la membrane de capteur (12) étant en un matériau élastomère dans la masse électriquement non conductrice duquel de fines particules en un matériau électroconducteur sont noyées selon une répartition homogène avec une densité telle qu'une compression, due à la pression de fluide, de la membrane de capteur (12), provoque une variation mesurable de sa résistance superficielle électrique.

2. Capteur de pression selon la revendication 1, **caractérisé en ce que** la membrane de capteur (12) est contactée en au moins deux zones de mesure distantes l'une de l'autre par un contact de mesure (16) respectif.

3. Capteur de pression selon la revendication 2, **caractérisé en ce que** la membrane de capteur (12) est fermement serrée sur son bord périphérique.

4. Capteur de pression selon la revendication 3, **caractérisé en ce qu'**un des contacts de mesure est formé par un anneau de contact qui prend appui contre le bord périphérique de la membrane de capteur (12).

5. Capteur de pression selon l'une des revendications 2 à 4, **caractérisé en ce que** les contacts de mesure (16) sont agencés sur le côté de la surface soutenue de manière rigide, de la membrane de capteur (12).

6. Capteur de pression selon la revendication 5, **caractérisé en ce que** les contacts de mesure (16) sont agencés de manière adjacente à la surface soutenue de la membrane de capteur (12), qui est à l'opposé de la surface pouvant être soumise à la pression de fluide à déterminer.

7. Capteur de pression selon l'une des revendications précédentes, **caractérisé en ce que** la membrane de capteur (12) est en appui sur un bloc support (14) avec sa surface soutenue de manière rigide, et **en ce qu'**une plaque de pression annulaire (20) est fixée contre le bord périphérique de la membrane de capteur (12) sur son côté pouvant être soumis à la pression de fluide.

8. Capteur de pression selon la revendication 7, **caractérisé en ce qu'**au moins un joint d'étanchéité annulaire entourant la surface, pouvant être soumise à la pression de fluide, de la membrane de capteur est fixé entre la plaque de pression (20) et la surface, tournée vers celle-ci, de la membrane de capteur (12).

9. Capteur de pression selon la revendication 8, **caractérisé en ce que** le joint d'étanchéité annulaire est formé par un bourrelet annulaire (12a) formé sur la périphérie extérieure de la membrane de capteur (12).

10. Capteur de pression selon la revendication 7 ou 8, **caractérisé en ce que** la plaque de pression annulaire (20) est fixée pour sa part contre une bride de raccordement annulaire (24) à une extrémité d'un raccord (26) avec insertion d'au moins un joint d'étanchéité.

11. Capteur de pression selon les revendications 7 à 9, **caractérisé en ce que** la bride de raccordement annulaire (24) est surmontée d'un collier de serrage (28) qui est fixé par des vis de serrage (30) contre un corps de base (18) logeant le bloc support (14) dans un évidement.

12. Capteur de pression selon la revendication 2 et une des revendications 7 à 11, **caractérisé en ce que** les contacts de mesure (16) avec des broches de contact raccordées à ceux-ci sont encastrés dans le bloc support (14).

13. Capteur de pression selon la revendication 12, **caractérisé en ce que** les broches de contact (16) dépassent du bloc support (14), sur la surface de celui-ci qui est détournée de la membrane de capteur (12), dans un puits de connecteur (32) qui est entouré par le corps de base annulaire (18).

14. Capteur de pression selon l'une des revendications 11 à 13, **caractérisé en ce que** l'anneau de serrage (28) est relié au corps de base (18) par des goujons d'ajustage (36) placés dans des trous alignés.

15. Capteur de pression selon l'une des revendications 1 à 6, **caractérisé en ce que** la membrane de capteur (12) prend appui à plat sur un bloc support (14), et le bloc support (14) avec la membrane de capteur (12) est fixé entre une surface annulaire (40a) et un bord rabattu (42) d'un corps de boîtier (40).

16. Capteur de pression selon la revendication 15, **caractérisé en ce que** le corps de boîtier est métallique, et la surface annulaire (40a) forme un anneau de contact établissant le contact avec la membrane de capteur (12) sur sa périphérie extérieure.
